Europäisches Patentamt

European Patent Office

Office européen des brevets

(19)

(11) Veröffentlichungsnummer: **0 255 667**
**B1**

(12) **EUROPÄISCHE PATENTSCHRIFT**

(45) Veröffentlichungstag der Patentschrift:
13.06.90

(51) Int. Cl.⁵: **C09B 67/00**, C09C 3/00,
B01F 7/08

(21) Anmeldenummer: 87110727.2

(22) Anmeldetag: 24.07.87

(54) Kontinuierliches Verfahren zur Herstellung von Flushpasten.

(30) Priorität: 08.08.86 DE 3626907

(43) Veröffentlichungstag der Anmeldung:
10.02.88 Patentblatt 88/6

(45) Bekanntmachung des Hinweises auf die Patenterteilung:
13.06.90 Patentblatt 90/24

(84) Benannte Vertragsstaaten:
CH DE FR GB IT LI

(56) Entgegenhaltungen:
DE-B- 2 056 611
US-A- 4 088 577
US-A- 4 227 936
US-A- 4 300 954
US-A- 4 309 223
US-A- 4 474 473

(73) Patentinhaber: BASF Aktiengesellschaft,
Carl-Bosch-Strasse 38, D-6700 Ludwigshafen(DE)

(72) Erfinder: Zettler, Hans Dieter, Bueckelhaube 23,
D-6718 Gruenstadt(DE)
Erfinder: Thiele, Heino, Dr., An der Froschlache 23,
D-6700 Ludwigshafen(DE)
Erfinder: Nachtrab, Rainer, An der Froschlache 7,
D-6700 Ludwigshafen(DE)
Erfinder: Sappok, Reinhard, Dr., 2366 Timberlee Drive,
Holland Michigan 49423(US)

## Beschreibung

Nach dem Stand der Technik werden schwer fließfähige Flushpasten in großvolumigen Knetern bei großen Verweilzeiten (t = 5 bis 25 h) diskontinuierlich hergestellt. Der Flushprozeß wird in mehreren Teilschritten durchgeführt (in der Regel 3 bis 5 "breaks"). Der Zeitaufwand für einen "break" beträgt etwa 1 bis 5 h.

Beim Flushprozeß wird eine wäßrige Pigmentsuspension bzw. Filterpreßkuchen unter Scherung mit Bindemittel(lösung) versetzt. Aufgrund von Oberflächenspannungseffekten geht das oleophile Pigment von der wäßrigen Phase in die ölige Bindemittelphase unter Abtrennung von Wasser über. Beim Vormischen der Suspension bzw. des Filterpreßkuchens und des Bindemittels bzw. der Bindemittellösung entsteht je nach dem Verhältnis von wäßriger Suspension bzw. Filterpreßkuchen zu Bindemittel(lösung) eine unterschiedliche viskose Paste.

Der Grad der Wasserabtrennung beim Flushen erfolgt umso vollständiger, je höher die Viskosität der Vormischung ist. Außerdem hat eine hochviskose Vormischung auch eine gute Dispergierung der Pigmentteilchen in der fertigen Flushpaste zur Folge. Bei einer zu niedrigviskosen Vormischung ist die Gefahr groß, daß aus der Flushpaste und dem Wasser eine Emulsion gebildet wird. Es gibt nur wenige Pigmente, die im niedrigviskosen Bereich geflusht werden können. Im niedrigviskosen Bereich gibt es kontinuierliche Flushverfahren (z.B. US-PS 4 309 223). Diese kontinuierlichen Verfahren sind jedoch wegen der erforderlichen Pumpen üblicherweise nur bis zu einer maximalen Viskosität von ca. 10 Pa.s durchführbar. Im Hochviskos-Bereich sind diese Verfahren vom Produkthandling her zu aufwendig.

Bei den meisten Flushpasten liegt jedoch die Viskosität oberhalb von 10 Pa.s. Der Grund für die bevorzugte Anwendung der hochviskosen Flushpasten liegt in deren besserer Qualität im Vergleich zu den niedrigviskosen. Zur Herstellung von hochviskosen Flushpasten (>100 Pa.s) sind keine gut handhabbaren kontinuierlichen Verfahren bekannt. In der US-PS 4 300 954 wird zwar ein kontinuierliches Verfahren zur Herstellung von hochviskosen Flushpasten beschrieben, jedoch weist das Verfahren folgende Nachteile auf: i) wegen ungeeigneter Geometrie der Schnecke schlechtes Einzugsverhalten des Filtergutes, ii) unzureichendes Mischverhalten des angewendeten Schneckenkonzeptes und iii) Zustopfen der Entwässerungsbohrungen durch die hochviskose Flushpaste.

Die in dieser US-PS genannte dicht kämmende Doppelschneckenmaschine arbeitet bei folgenden Parametern: Schergefälle 4000 s⁻¹. Aus der Geometrie dieser Maschine ergibt sich ein ständig geschertes Volumen von <0,5 Vol%.

Der diskontinuierliche Flushprozeß im Kneter ist mit folgenden Nachteilen verknüpft:

α) Der Anteil des gescherten Volumens an Paste zum Gesamtvolumen des Kneters liegt bei weniger als 1 o/oo. Bei den großen Knetervolumina sind daher hohe Verweilzeiten von einigen Stunden nötig, um den Flushprozeß durchführen zu können. Der Kneter liefert daher nur kleine Raum-Zeit-Ausbeuten.

β) Wegen der hohen Viskosität kann die Flushpaste im Kneter nicht zu intensiv geschert werden, da sonst die durch Energiedissipation erzeugte Wärme nicht mehr abgeführt werden kann. Durch örtliche Temperaturspitzen kommt es daher zur Produktschädigung. Bei Verwendung eines Kneters zur Herstellung von Flushpasten ist man bei Schergefällen von ca. 500 sec⁻¹ an einer oberen Grenze angelangt. Dadurch wird die Qualität der Dispersion des Pigments in der Flushpaste auch von dem niedrigen Schergefälle bestimmt.

γ) Zur Herstellung gebrauchsfertiger Flushpasten muß der Kneter in drei Stufen absatzweise betrieben werden:

i) Der erste Teilschritt zur Durchführung des Flushprozesses ist die Zugabe von Filterpreßkuchen/Pigmentsuspension und eines Teils des Bindemittels bzw. der Bindemittellösung in den Kneter, um eine hochviskose Vormischung zu erhalten. Diese Vormischung wird dann, je nach Oleophilität des Pigments, eine bis mehrere Stunden geknetet. Hierbei findet der Phasentausch statt. Das oleophile Pigment geht aus der Wasserphase in die ölige Bindemittelphase über unter Abgabe von Wasser ("break")

ii) Nach abgeschlossener Umbenetzung wird der Kneter geöffnet und das abgetrennte Wasser durch Kippen des Kneters von der Flushpaste abgegossen.

iii) Die oben genannten Schritte werden 3 bis 5mal wiederholt, bis eine vollständige Füllung des Kneters erreicht ist.

iv) Anschließend wird weiteres Bindemittel bzw. weitere Bindemittel lösung in den Kneter gegeben, um die Flushpaste zu einer gebrauchsfertigen Druckfarbe zu verdünnen.

Dieses absatzweise Herstellungsverfahren hat Schwankungen in der Produktqualität zur Folge.

Aus der DE-OS 24 37 510, die der US-PS 4 088 577 entspricht, ist ein diskontinuierliches Verfahren zur Herstellung von zähflüssigen Flushpasten unter Verwendung einer horizontal liegenden Mischmaschine bekannt. Bei diesem wird die Mischwerkswelle mit einer solchen Drehzahl angetrieben, daß die Flushpaste auf der Mischwerkswelle aufgespult wird.

Die Qualität der Flushpaste wird bestimmt von der Güte der Dispersion der Pigmentteilchen im Bindemittel und vom Grad der Abtrennung des Wassers. Die Qualität der Dispersion wird umso besser, je höher die beim Flushprozeß auftretenden Scherkräfte sind. Die Scherkräfte werden quantifiziert durch das Produkt aus Zähigkeit und Schergefälle. Je höher also die Zähigkeit und das angelegte Schergefälle sind, desto besser wird die Dispersion des Pigments in der Flushpaste. Aus Qualitätsgründen ist es daher vorteilhaft, Flushpasten im hochviskosen Bereich (η>100 Pa.s) herzustellen.

Aufgabe der vorliegenden Erfindung war, ein kontinuierliches Verfahren zur Herstellung von schwerfließenden (hochviskosen) Flushpasten bereitzustellen.

Dementsprechend betrifft die vorliegende Erfindung ein kontinuierliches Verfahren zur Herstellung von schwer fließfähigen Flushpasten aus wäßrigen Pigmentsuspensionen (Preßkuchen) und einer in Wasser nicht mischbaren, gegebenenfalls Bindemittel enthaltenden organischen Flüssigkeit mit Hilfe eines Intensivmischers, das dadurch gekennzeichnet ist, daß man die wäßrige Pigmentsuspension (Preßkuchen) und die mit Wasser nicht mischbare organische Flüssigkeit (Bindemittel) oder das Gemisch aus wäßriger Pigmentsuspension (Preßkuchen) und mit Wasser nicht mischbarer organischer Flüssigkeit (Bindemittel) kontinuierlich in eine Intensivmisch- und Scherzone führt, wobei 3 bis 10 Vol% des in der Intensivmisch- und Scherzone befindlichen Gemisches mit einem Schergefälle von 500 bis 7500 s$^{-1}$ beaufschlagt werden und die Verweilzeit unter Einwirkung dieses Schergefälles 0,5 bis 60 Sekunden beträgt und die restlichen 97 bis 90 Vol% des Gemisches mit Schergefällen beaufschlagt werden, die mindestens um den Faktor 10 niedriger liegen, und von der die Intensivmisch- und Scherzone verlassenden Mischung aus Wasser und Flushpaste die Wasserphase abtrennt.

Das Verfahren gemäß der Erfindung zeichnet sich dadurch aus, daß es die Nachteile der diskontinuierlichen Verfahren zur Herstellung von Flush pasten im Hochviskosbereich ($\eta$>100 Pa.s) behebt und dadurch zu einer verbesserten und konstanten Qualität der Flushpasten führt. Das Verfahren arbeitet kontinuierlich und ist bei hochviskosen Systemen ($\eta$>100 Pa.s) anwendbar.

Beim vorliegenden kontinuierlichen Verfahren werden 3 bis 10 Vol% der in einem Intensivmisch- und Scherelement befindlichen Mischung aus wäßriger Pigmentsuspension und Bindemittel(lösung) zu jedem Zeitpunkt mit einem Schergefälle von 500 bis 7500 sec$^{-1}$ vorzugsweise von 1700 bis 5500 sec$^{-1}$, beaufschlagt. Die restlichen 97 bis 90 Vol% des Gemisches werden mit einem Schergefälle beaufschlagt, die mindestens um den Faktor 10 niedriger liegen.

Diese hohen Schergefälle in Verbindung mit dem hohen Anteil an geschertem Volumen bedeuten, daß für den eigentlichen Flushprozeß nur Verweilzeiten von 0,5 bis 60 sec erforderlich sind.

Beim Schervorgang des Gemisches im Intensivmisch- und Scherelement muß gewährleistet sein, daß jedes einzelne Volumenelement mindestens einmal von dem hohen Schergefälle erfaßt wird. Dies kann z.B. durch geeignete Länge des Intensivmisch- und Scherelements erreicht werden. Wenn dieses Element zu kurz ist, werden nicht alle Volumenelemente dem hohen Schergefälle unterzogen. Dies hat zur Folge, daß die Abtrennung des Wassers beim Flushprozeß unvollständig abläuft.

Andererseits bringt ein zu langes Intensivmisch- und Scherelement keine weiteren Vorteile mehr. Es führt nur zu einem höheren Energieverbrauch und damit zu einem unwirtschaftlichen Betrieb.

Im allgemeinen ist die Verweildauer des Gemisches im Intensivmisch- und Scherelement, aufgrund dessen Länge und/oder einer Änderung des Durchsatzes so zu bemessen, daß sich eine Verweilzeit von 0,5 bis 60, vorzugsweise von 0,5 bis 30, vorzugsweise von 2 bis 20 Sekunden ergibt.

Die durch das Verfahren gemäß der Erfindung erzielbare niedrige Verweilzeit erlaubt es, das Produkt sehr viel stärker zu scheren als dies im diskontinuierlichen Kneterbetrieb möglich wäre, ohne dabei das Produkt thermisch zu schädigen. Dies wird durch die bessere Mischwirkung des Intensivmisch- und Scherelements begründet. Es kommt zu einem schnelleren thermischen Ausgleich und damit nicht zu schädigenden Temperaturspitzen.

Für die Flushpasten bedeuten die nach dem neuen Verfahren erzielbaren höheren Schergefälle eine bessere Dispergierung des Pigments und damit eine bessere Produktqualität. Außerdem wird der Grad der Wasserabtrennung durch die höheren Scherkräfte gesteigert. D.h. das vorliegende kontinuierliche Verfahren bringt also bezüglich der Qualität der Flushpaste und dem Grad der Abtrennung des Wassers gegenüber dem Stand der Technik eine deutliche Verbesserung.

Nach dem Entwässern können der Flushpaste außerdem in Flushpasten übliche Zusätze zugemischt werden. Weiterhin kann nach dem Abtrennen des Flushwassers das in der Flushpaste enthaltene Pigment nachdispergiert werden.

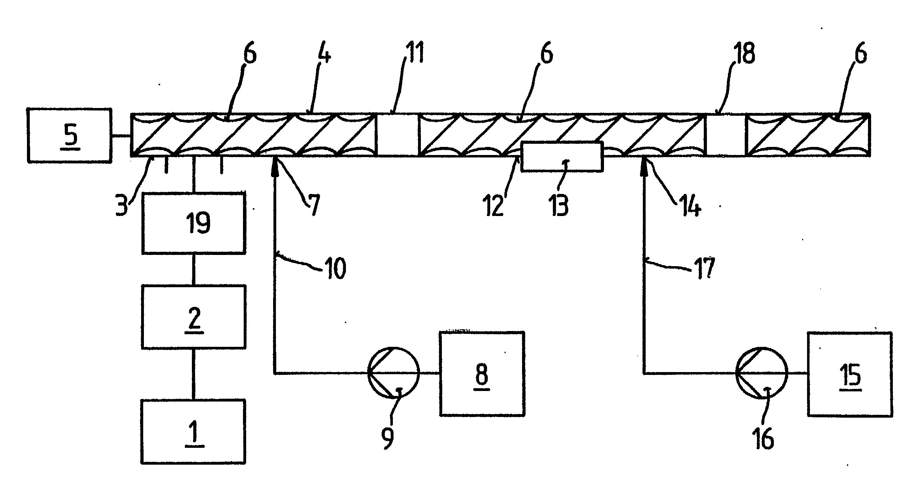

Eine für das Verfahren gemäß der vorliegenden Erfindung zu verwendende vorteilhafte Vorrichtung zeigt das Verfahrensfließbild Abb. 1.

Die Pigmentsuspension bzw. der feuchte Preßkuchen (1) wird mittels einer Dosiervorrichtung (2) kontinuierlich dem Flushprozeß zugeführt. Es kann sowohl noch fließfähige Pigmentslurry als auch als bereits stichfester Filterpreßkuchen verwendet werden. Der Wassergehalt der verwendeten Filterpreßkuchen/Suspensionen liegt in der Regel bei 20 bis 90 Gew.-%.

Der dosierte Filterpreßkuchen (1) wird kontinuierlich in eine Einschneckenmaschine (4) eingebracht, die von einem Motor (5) angetrieben wird.

Die Einschneckenmaschine (4) besteht aus mehreren Gehäuseelementen, die beheizbar sind. Übliche Temperaturen der Gehäuse beim Flushprozeß liegen zwischen 20 und 220°C, vorzugsweise zwischen 30 und 100°C. Die Schneckenwelle ist mit verschiedenen Schneckenteilen (6) und Intensivmisch- und Scherelementen (11) und (18) bestückt.

Der Filterkuchen (1) gelangt durch das Eintrittsgehäuse (3) in die Einschneckenmaschine (4). Die Schneckenelemente (6) transportieren den Filterpreßkuchen nach vorne. Falls der Filterkuchen zu stark ausgeprägte thixotrope Fließeigenschaften besitzt und die Schneckenelemente von (4) keine ausreichende Förderwirkung auf den Filterkuchen ausüben, muß vor (4) ein zwangsförderndes System (19) geschaltet werden, das den Druckaufbau und den Transport des Filterkuchens übernimmt. Hierfür übliche Apparate sind Pumpen oder gegenläufig, dichtkämmende Doppelschnecken.

An der Zugabestelle für mit Wasser nicht mischbare organische Flüssigkeit (Bindemittel) (7) wird das erste Bindemittel/Bindemittellösung (8) in die Einschneckenmaschine (4) zugegeben. Das Bindemittel (8) wurde auf die gewünschte Temperatur vorgeheizt. Mit einer Pumpe (9) wird das Bindemittel über eine Rohrleitung (10) an der Zugabestelle (7) in die Einschneckenmaschine eindosiert. Die Zugabestelle (7) kann durch eine Gehäusebohrung realisiert werden. Das Verhältnis von Bindemittel zu Pigment an der Zugabestelle (7) liegt im allgemeinen zwischen 3:1 bis 1:3 Gew.-Teilen.

Die Qualität der Flushpaste wird durch eine möglichst hochviskose Vormischung günstig beeinflußt. Die Desagglomeration der Pigmente im Bindemittel nimmt mit steigender Viskosität der Vormischung zu.

Durch die Rotation der Schnecke kommt es zu einer Vermischung von Bindemittel (8) und Filterpreßkuchen (1). Die Vormischung aus Bindemittel und Filterpreßkuchen gibt im allgemeinen eine hochviskose Paste, wobei ein Viskositätsbereich von $\eta > 100$ Pa.s erreicht wird. Die Schnecke (6) fördert diese hochviskose Vormischung weiter zum Intensivmisch- und Scherelement (Phasentauschelement) (11), wo der Flushprozeß stattfindet.

Zur technischen Realisierung kann z.B. ein Rotor/Stator-System verwendet werden. Die Spaltweiten zwischen Rotor und Stator betragen bei Wellendurchmesser 0,5 bis 2 mm. Je nach Drehzahl der Schnecke treten Schergefälle von 500 bis 7500 $sec^{-1}$ auf. Das Phasentauschelement (11) muß die Anforderung erfüllen, daß zu jedem Zeitpunkt 3 bis 10 Vol% der in ihm befindlichen Mischung aus Filterpreßkuchen und Bindemittel mit dem hohen Schergefälle beaufschlagt werden.

Das Intensivmisch- und Scherelement hat keine Förderwirkung; es wird durch die Schnecke überschoben.

In diesem Intensivmisch- und Scherelement findet der eigentliche Flushprozeß statt. Das meist oleophile Pigment geht von der Wasserphase in die Ölphase über.

Aufgrund des hohen Schergefälles in Kombination mit der hohen Viskosität und dem großen Volumenanteil an geschertem Produkt beträgt die Verweilzeit im Intensivmisch- und Scherelement zur Durchführung des Flushprozesses je nach Art des Pigments nur 0,5 bis 60, vorzugsweise 0,5 bis 30 sec. Die Länge des Intensivmisch- und Scherelements und/oder der Durchsatz müssen so bemessen werden, daß sich diese Verweilzeit ergibt.

Die Variationsmöglichkeit aus der Länge des Intensivmisch- und Scherelements in Kombination mit dem Durchsatz ermöglicht eine hohe Variation, um den praktischen Erfordernissen hinsichtlich der Verweilzeit gerecht zu werden.

Die Intensivmisch- und Scherelementlänge kann in Schneckenmaschinen, die in ihrer Schneckengeometrie aus einzelnen auswechselbaren Schneckenelementen aufgebaut sind, beliebig variiert werden.

Nachdem die Flushpaste das Intensivmisch- und Scherelement verlassen hat, liegt trotz des hohen Schergefälles keine Emulsion vor, sondern das Gemisch zerfällt in zwei Phasen, in die hochviskose Flushpaste und Wasser.

Die Schnecke (6) fördert die beiden Phasen weiter in das Entwässerungsgehäuse (12). Hier wird das Wasser von der Flushpaste abgetrennt und aus der Einschneckenmaschine (4) entfernt.

Das Entwässerungsgehäuse (12) hat am Umfang in axialer Richtung einen Öffnungsschlitz, durch den das beim Flushprozeß abgetrennte Wasser herausfließt.

Damit nebem dem Wasser keine Flushpaste abfließt, ist vorzugsweise parallel zur Schnecke im Schlitz eine rotierende Walze (13) angebracht. Diese Walze (13) dreht sich gegensinnig zur Schnecke (6). Die Walze (13) hat eine wesentlich kleinere Umfangsgeschwindigkeit als die Schnecke (6). Zweckmäßige Verhältnisse der Umfangsgeschwindigkeit der Walze (13) zu der Schnecke (6) sind 1:10 bis 1:100.

Das langsame Drehen der Walze (13) bewirkt, daß aus dem zwischen Schnecke und Walze gebildeten Spalt das niedrigviskose Wasser über die rotierende Walze (13) hinweg aus dem Gehäuse abfließt, während die hochviskose Flushpaste durch die Rotation der Walze wieder in die Schnecke zurückgefördert wird.

Übliche Entwässerungsgrade, die mit einem Entwässerungsgehäuse dieser Art möglich sind, liegen bei > 80%.

Die nach der Entwässerung erhaltene Flushpaste ist für eine Anwendung oftmals zu viskos. Daher ist es notwendig, einen Verdünnungsschritt anzuschließen.

Hierzu wird die hochviskose Flushpaste von der Schnecke (6) vom Entwässerungsgehäuse (12) zur nächsten Zugabestelle für organische Flüssigkeit/Bindemittel (14) gefördert.

Mittels der Pumpe (16) wird das Bindemittel aus dem Behälter (15) durch eine Rohrleitung (17) in die Zugabestelle (14) der Einschneckenmaschine gebracht. Als Zugabestelle (14) dient eine Gehäusebohrung.

Die Schnecke (6) fördert die Vormischung aus Flushpaste und weiterem Bindemittel zum nächsten Intensivmisch- und Scherelement (18). An das Intensivmisch- und Scherelement (18) werden dieselben Anforderungen gestellt wie an (11). Das Intensivmisch- und Scherelement (18) wirkt als Dispergierelement. Hier werden die Flushpaste und das zusätzliche Bindemittel durch Scherung und Vermischung zu einer gebrauchsfertigen Flushpaste oder zu fertigen Druckfarben weiterverarbeitet.

Nach Verlassen des Intensivmisch- und Scherelements (18) wird die fertige Flushpaste durch die dem Element (18) folgenden Schneckenelemente ausgetragen.

Das Mengenverhältnis Pigment zu organischer Flüssigkeit/Bindemittel in der gebrauchsfertigen Flushpaste kann in einem weiten Bereich liegen. Der Gehalt der Flushpaste an Pigment liegt in der Regel zwischen 20 und 60 Gew.-%, bezogen auf die Flushpaste.

Als bei dem vorliegenden Verfahren verwendete Bindemittel(lösungen) und Lösungsmittel kommen die zur Herstellung von Flushpasten üblichen Harze bzw. deren Lösungen in Betracht. Die geeigneten Harze und Lösungsmittel sind dem auf dem Gebiete tätigen Durchschnittsfachmann bekannt. Die Harze sind in Wasser nicht lösliche Produkte, wie sie in Druckfarben auf der Basis Öl angewendet werden: oleophile Harze wie trocknende und halbtrocknende Öle; Lithofirnisse auf der Basis Leinöl; Colophonium, dimerisiertes Colophonium und deren Ester, mit Malein-, Fumarsäure und/oder Phenol modifiziertes Colophonium und Colophoniumester; aliphatische und aromatische Kohlenwasserstoffharze; Polyindane, Cumaron, Indanharze, alkylaromatische Harze, Alkydharze, durch Urethan oder Polyamid modifizierte Alkydharze; Polyolefine, Phthalsäureester, Rizinusöle, Fischöle, Leinöle, Heatset- und Quickset-Bindemittel, außerdem öllösliche Fettsäuren wie Öl- und Linolsäure.

Als organische mit Wasser nicht mischbare Flüssigkeiten (Lösungsmittel) kommen aliphatische Kohlenwasserstoffe wie Erdöldestillate mit Siedepunkten von 200 bis 375°C, Petroleum, sog. "mineralspirits", Naphtha, petroleumaromatische Lösungsmittel wie Solvesso® No. 100, Aromaten mit Siedepunkten von 60 bis 85°C und einem KB-Wert von 91, Aromaten mit KB-Werten von 92 bis 100 wie Xylol, sowie in Wasser wenig bis schwer löslich Alkanole, Ketone und Ether wie die Butanole und Methyl-isobutylketon in Betracht. Beim Verdünnungsschritt können neben den genannten Flüssigkeiten auch Ethylenglykolmonomethyl-und -ethylether verwendet werden.

Die Lösungsmittel bzw. -Gemische sind den verwendeten Harzen (Bindemittel) angepaßt und müssen letztere vollständig lösen.

Das Verfahren soll durch die folgenden Ausführungsbeispiele zusätzlich erläutert werden. Die Prozentangaben sind Gewichts%.

Beispiel 1

40 kg/h stichfester Pigmentpreßkuchen von C.I. Pigment Red 57:1; C.I. Nr. 15850:1 (22,2% Pigment) werden über eine Dosiervorrichtung kontinuierlich in eine Einschneckenmaschine gebracht. Dies entspricht einem Mengenstrom von 31,12 kg/h Wasser und 8,88 kg/h Pigment. Gleichzeitig wird eine Bindemittellösung aus 70% eines mit Maleinsäure modifizierten Colophoniumesters der Abietinsäure (Filtrez® 3790) und 30% eines aliphatischen Öls (Magiesol® 47) an der Bindemittelzugabestelle (7) eindosiert. Menge: 16,0 kg/h. Die Einschneckenmaschine wird auf 100°C beheizt. Die Drehzahl der Schneckenmaschine beträgt 300 U/min. Dies entspricht einem Schergefälle im Intensivmisch- und Scherelement zur Durchführung des Flushprozesses von 1697 sec$^{-1}$. Von diesem Schergefälle werden 6 Vol.-% der im Intensivmisch- und Scherelement berfindlichen Vormischung aus Filterpreßkuchen und Bindemittel erfaßt. Die restlichen 94 Vol.-% unterliegen einem Schergefälle, das kleiner als $\frac{1}{10}$ des angegebenen Schergefälles ist. Die Verweilzeit dieser Vormischung im Intensivscherelement beträgt 8 Sekunden. Das Intensivmisch- und Scherelement ist durch Schneckenelemente in zwei Teile zerlegt.

Die Vormischung aus Filterpreßkuchen und Bindemittel ergibt eine hochviskose, nicht mehr fließfähige Paste ($\eta$ > 2000 Pa.s).

Im Entwässerungsgehäuse werden 26,9 kg/h Wasser aus der Einschneckenmaschine abgezogen. Dies entspricht 86% des eingebrachten Wassers.

Zum Verdünnen der erhaltenen Flushpaste werden nach dem Entwässerungsgehäuse noch einmal 5,0 kg/h der Bindemittellösung zugegeben.

Die Temperatur der Flushpaste am Austritt der Einschneckenmaschine beträgt 91°C.

Die fertige Flushpaste enthält 26% Pigment, 63% Bindemittel und 11% Wasser.

Beispiel 2

40,0 kg/h stichfester Preßkuchen von C.I. Pigment Red 57:1; C.I. Nr. 15850:1 (22,3 Gew.-% Pigment) werden über eine Dosiervorrichtung in eine Einschneckenmaschine gebracht. Dies entspricht einem Mengenstrom von 31,08 kg/h Wasser und 8,92 kg/h Pigment. Die Einschneckenmaschine wird auf 100°C beheizt. Gleichzeitig werden 12,5 kg/h Bindemittellösung [60%ige Lösung eines aromatischaliphatischen Kohlenwasserstoffharzes (Petrorez® 140 der Fa. Lawter) in einem aliphatischen Öl (Magiesol®-47 der Firma Magie Bros) an der Bindemittelzugabestelle (7) eindosiert.

Die Drehzahl der Schneckenmaschine beträgt 700 U/min. Dies entspricht einem Schergefälle im Intensivmisch- und Scherelement zur Durchführung des Flushprozesses von 3959 sec$^{-1}$. Von diesem Schergefälle werden 6 Vol.-% der im Intensivmisch- und Scherelement befindlichen Vormischung aus Filterpreßkuchen und Bindemittel erfaßt. Die restlichen 94 Vol.-% unterliegen einem Schergefälle, das kleiner als $\frac{1}{10}$ des angegebenen Schergefälles ist. Die Verweilzeit dieser Vormischung im Intensivmisch- und Scherelement beträgt 8 Sekunden. Das Intensivmisch- und Scherelement ist durch Schneckenelemente in zwei Teile zerlegt.

Die Vormischung aus Filterpreßkuchen und Bindemittel ergibt eine hochviskose, nicht mehr fließfähige Paste ($\eta$ > 2000 Ps.a).

Im Entwässerungsgehäuse werden 26,4 kg/h Wasser aus der Einschneckenmaschine abgezogen. Damit werden 85% des eingebrachten Wassers abgeschieden.

Zum Verdünnen der erhaltenen Flushpaste werden noch einmal 5,0 kg/h Bindemittel zugegeben.

Die Temperatur der Flushpaste am Austritt der Einschneckenmaschine beträgt 97°C.

Die fertige Flushpaste hat folgende Zusammensetzung: 29% Pigment, 56% Bindemittel, 15% Wasser.

Beispiel 3

25 kg/h stichfester Pigmentpreßkuchen von C.I. Pigment Red 57:1; C.I. Nr. 15850:1 (21,8% Pigment) werden über eine Dosiervorrichtung in eine Einschneckenmaschine gebracht. Dies entspricht einem Mengenstrom von 19,55 kg/h Wasser und 5,45 kg/h Pigment. Die Einschneckenmaschine wird auf 100°C beheizt.

Gleichzeitig werden an der Bindemittelzugabestelle 9,8 kg/h einer 60%igen Lösung eines Pentaerythritesters einer dimeren Harzsäure (Pentalyn® K von Hercules) in einem aliphatischen Öl (Magie® 535 der Magie Bros) eindosiert.

Die Drehzahl der Schneckenmaschine beträgt 550 U/min. Dies entspricht einem Schergefälle im Intensivmisch- und Scherelement zur Durchführung des Flushprozesses von 3110 sec⁻¹. Von diesem Schergefälle werden im Mittel 6 Vol% der im Intensivmisch- und Scherelement befindlichen Vormischung aus Filterpreßkuchen und Bindemittel erfaßt. Die Verweilzeit dieser Vormischung im Intensivmisch- und Scherelement beträgt 12 Sekunden. Die restlichen 94 Vol.-% unterliegen einem Schergefälle, das kleiner als $1/10$ des angegebenen Schergefälles ist. Das Intensivmisch- und Scherelement ist durch Schneckenelemente in zwei Teile zerlegt.

Die Vormischung aus Filterpreßkuchen und Bindemittel ergibt eine hochviskose, nicht mehr fließfähige Paste ($\eta > 2000$ Pa.s).

Im Entwässerungsgehäuse werden 18,0 kg/h Wasser aus der Einschneckenmaschine abgezogen. Damit werden 92% des eingebrachten Wassers abgeschieden.

Zum Verdünnen der erzeugten Flushpaste werden dann noch weitere 5,0 kg/h Bindemittel zugegeben.

Die Temperatur der Flushpaste am Austritt der Einschneckenmaschine beträgt 92°C.

Die fertige Flushpaste hat folgende Zusammensetzung: 25% Pigment, 68% Bindemittel und 7% Wasser.

## Beispiel 4

30 kg/h stichfester Pigmentpreßkuchen von C.I. Pigment Blue 15; C.I. Nr. 74160 (38,5 Gew.-% Pigment) werden über eine Dosiervorrichtung in eine Einschneckenmaschine gebracht. Dies entspricht einem Mengenstrom von 18,45 kg/h Wasser und 11,55 kg/h Pigment. Die Schneckenmaschine wird auf 130°C beheizt. Gleichzeitig werden an der Bindemittelzugabestelle 11,5 kg/h flüssiges Polyethlen als Bindemittel eindosiert.

Die Drehzahl der Schneckenmaschine beträgt 500 U/min. Dies entspricht einem Schergefälle im Intensivmisch- und Scherelement zur Durchführung des Flushprozesses von 2827 sec.⁻¹. Von diesem Schergefälle werden im Mittel 6 Vol.-% der im Intensivmisch- und Scherelement befindlichen Vormischung aus Filterpreßkuchen und Bindemittel erfaßt. Die restlichen 94 Vol.-% unterliegen einem Schergefälle, das kleiner als $1/10$ des angegebenen Schergefälles ist. Die Verweilzeit dieser Vormischung im Intensivscherelement beträgt 10 Sekunden. Das Intensivmisch- und Scherelement ist in einem Stück angeordnet.

Die Vormischung aus Filterpreßkuchen und Bindemittel ergibt eine hochviskose, nicht mehr fließfähige Paste ($\eta > 200$ Pa.s).

Im Entwässerungsgehäuse werden 17,71 kg/h Wasser aus der Einschneckenmaschine abgezogen. Damit werden 96% des eingebrachten Wassers abgeschieden.

Zum Verdünnen der erzeugten Flushpaste werden noch einmal 1,9 kg/h flüssiges Polyethylen zugegeben.

Die Temperatur der Flushpaste am Austritt der Einschneckenmaschine beträgt 100°C.

Die fertige Flushpaste hat folgende Zusammensetzung: 45% Pigment, 52% Bindemittel und 3% Wasser.

## Beispiel 5

40 kg/h stichfester Preßkuchen von C.I. Pigment Red 57:1; C.I. Nr. 15850:1 (22,2% Pigment) werden über eine Dosiervorrichtung in eine Einschneckenmaschine gebracht. Dies entspricht einem Mengenstrom von 31,12 kg/h Wasser und 8,88 kg/h Pigment. Die Schneckenmaschine wird auf 100°C beheizt.

Gleichzeitig werden an der Bindemittelzugabestelle 14,25 kg/h eines Alkydharzes auf der Basis Isophthalsäure (Solvar® der Fa. Lawter) als Bindemittel eindosiert.

Die Drehzahl der Schneckenmaschine beträgt 400 U/min. Dies entspricht einem Schergefälle im Intensivmisch- und Scherelement zur Durchführung des Flushprozesses von 2262 sec⁻¹. Von diesem Schergefälle werden im Mittel 6 Vol.-% der im Intensivmisch- und Scherelement befindlichen Vormischung aus Filterpreßkuchen und Bindemittel erfaßt. Die restlichen 94 Vol.-% unterliegen einem Schergefälle, das kleiner als $1/10$ des angegeben Schergefälles ist. Die Verweilzeit dieser Vormischung im Intensivscherelement beträgt 8 Sekunden. Das Intensivmisch- und Scherelement ist durch Schneckenelemente in zwei Teile zerlegt.

Die Vormischung aus Filterpreßkuchen und Bindemittel ergibt eine hochviskose, nicht mehr fließfähige Paste ($\eta > 200$ Pa.s).

Im Entwässerungsgehäuse werden 26,33 kg/h Wasser aus der Schneckenmaschine abgezogen. Damit werden 85% des eingebrachten Wassers abgeschieden.

Zum Verdünnen der erzeugten Flushpaste werden nach der Wasserabtrennung weitere 5,0 kg/h Bindemittel zugegeben.

Die Temperatur der Flushpaste am Austritt der Einschneckenmaschine beträgt 92°C.

Die fertige Flushpaste hat folgende Zusammensetzung: 27% Pigment, 59% Bindemittel und 14% Wasser.

## Beispiel 6

25 kg/h stichfester Pigmentpreßkuchen von C.I. Pigment Yellow 12; C.I. Nr. 21090 (20% Pigment) werden über eine Dosiervorrichtung in eine Einschneckenmaschine gebracht. Dies entspricht einem Mengenstrom von 20,0 kg/h Wasser und 5,0 kg/h Pigment. Die Einschneckenmaschine ist auf 20°C temperiert. Gleichzeitig werden an der Bindemittelzugabestelle (7) 8,0 kg/h einer 60%igen Lösung eines aromatisch aliphatischen Kohlenwasserstoffharzes (Petrorez® 140 der Fa. Lawter) in einem aliphatischen Öl (Magiesol®-47 der Fa. Magie Bros) als Bindemittel eindosiert.

Die Drehzahl der Schneckenmaschine beträgt 600 U/min. Dies entspricht einem Schergefälle im Intensivmisch- und Scherelement zur Durchführung des Flushprozesses von 3392 sec⁻¹. Von diesem Schergefälle werden im Mittel 6 Vol.-% der im Intensivmisch- und Scherelement befindlichen Vormischung aus Filterpreßkuchen und Bindemittel erfaßt. Die mittlere Verweilzeit dieser Vormischung im Intensivmisch- und Scherelement beträgt 13 Sekunden. Die restlichen 94 Vol.-% unterliegen einem Schergefälle, das kleiner als $1/10$ des angegebenen Schergefälles ist.

Die Vormischung aus Filterpreßkuchen und Bindemittel ergibt eine hochviskose, nicht mehr fließfähige Paste ($\eta$ > Pa.s).

Im Entwässerungsgehäuse werden 18,4 kg/h Wasser aus der Einschneckenmaschine abgezogen. Damit werden 92% des Wassers abgeschieden.

Zum Verdünnen der erzeugten Flushpaste werden nach der Wasserabtrennung weitere 1,5 kg/h Bindemittellösung zugegeben.

Die Temperatur der Flushpaste am Austritt der Einschneckenmaschine beträgt 55°C.

Die fertige Flushpaste hat folgende Zusammensetzung: 31% Pigment; 59% Bindemittel; 10% Wasser.

Beispiel 7

Man verfährt wie im Beispiel 6, verwendet jedoch anstelle von C.I. Pigment Yellow 12 einen Preßkuchen von C.I. Pigment Yellow 13; C.I. Nr. 21 100 mit einem Pigmentgehalt von 19%.

Man erhält eine Flushpaste, die 31% Pigment, 60% Bindemittel und 9% Wasser enthält.

Beispiel 8

25 kg/h stichfester Pigmentpreßkuchen von C.I. Pigment Red 57:1; C.I. Nr. 15850:1 (21,8% Pigment) werden über eine Dosiervorrichtung in eine Einschneckenmaschine gebracht. Dies entspricht einem Mengenstrom von 19,55 kg/h Wasser und 5,45 kg/h Pigment. Die Einschneckenmaschine wird auf 100°C beheizt.

Gleichzeitig werden an der Bindemittelzugabestelle 12,0 kg/h einer 60%igen Lösung eines Pentaerythritesters einer dimeren Harzsäure (Pentalyn® K von Hercules) in einem aliphatischen Öl (Magie® 535 der Magie Bros) eindosiert.

Die Drehzahl der Schneckenmaschine beträgt 950 U/min. Dies entspricht einem Schergefälle im Intensivmisch- und Scherelement zur Durchführung des Flushprozesses von 5371 sec⁻¹. Von diesem Schergefälle werden im Mittel 6 Vol.-% der im Intensivmisch- und Scherelement befindlichen Vormischung aus Filterpreßkuchen und Bindemittel erfaßt. Die restlichen 94 Vol.-% unterliegen einem Schergefälle, das kleiner als $1/10$ des angegebenen Schergefälles ist. Die Verweilzeit dieser Vormischung im Intensivmisch- und Scherelement beträgt 12 Sekunden. Das Intensivmisch- und Scherelement ist durch Schneckenelemente in zwei Teile zerlegt.

Die Vormischung aus Filterpreßkuchen und Bindemittel ergibt eine hochviskose, nicht mehr fließfähige Paste ($\eta$ > 2000 Pa.s).

Im Entwässerungsgehäuse werden 16,52 kg/h Wasser aus der Einschneckenmaschine abgezogen. Damit werden 84,5% des eingebrachten Wassers abgeschieden.

Zum Verdünnen der erzeugten Flushpaste werden dann noch weitere 3,0 kg/h Bindemittel zugegeben.

Die Temperatur der Flushpaste am Austritt der Einschneckenmaschine beträgt 92°C.

Die fertige Flushpaste hat folgende Zusammensetzung: 23% Pigment, 64% Bindemittel und 13% Wasser.

## Patentansprüche

1. Kontinuierliches Verfahren zur Herstellung von schwer fließfähigen Flushpasten aus wäßrigen Pigmentsuspensionen (Preßkuchen) und einer in Wasser nicht mischbaren, gegebenenfalls Bindemittel enthaltenden organischen Flüssigkeit mit Hilfe eines Intensivmischers, dadurch gekennzeichnet, daß man die wäßrige Pigmentsuspension (Preßkuchen) und die mit Wasser nicht mischbare organische Flüssigkeit (Bindemittel) oder das Gemisch aus wäßriger Pigmentsuspension (Preßkuchen) und mit Wasser nicht mischbarer organischer Flüssigkeit (Bindemittel) kontinuierlich in eine Intensivmisch- und Scherzone führt, wobei zu jedem Zeitpunkt 3 bis 10 Vol% des in der Intensivmisch- und Scherzone befindlichen Gemisches mit einem Schergefälle von 500 bis 7500 s⁻¹ beaufschlagt werden und die Verweilzeit unter Einwirkung dieses Schergefälles 0,5 bis 60 Sekunden beträgt und die restlichen 97 bis 90 Vol% des Gemisches mit Schergefällen beaufschlagt werden, die mindestens um den Faktor 10 niedriger liegen, und von der die Intensivmisch- und Scherzone verlassenden Mischung aus Wasser und Flushpaste die Wasserphase abtrennt.

2. Verfahren gemäß Anspruch 1, dadurch gekennzeichnet, daß das Schergefälle 1700 bis 5500 s⁻¹ beträgt.

3. Verfahren gemäß Anspruch 1 oder 2, dadurch gekennzeichnet, daß die Temperatur in der Intensivmisch- und Scherzone zwischen 20 und 220°C, vorzugsweise zwischen 20 und 100°C liegt.

4. Verfahren gemäß Anspruch 1, 2 oder 3, dadurch gekennzeichnet, daß man als Intensivmischvorrichtung eine Schneckenmaschine verwendet.

5. Verfahren gemäß den Ansprüchen 1 bis 4, dadurch gekennzeichnet, daß die Vorrichtung auf der Abflußseite eine Öffnung mit einer Walze oder einem Walzenpaar besitzt, deren Drehbewegung das Abfließen der Flushpaste verhindert, jedoch das Abfließen der wäßrigen Phase erlaubt.

6. Verfahren gemäß den Ansprüchen 1 bis 5, dadurch gekennzeichnet, daß der Flushpaste nach dem Abtrennen des Wassers weitere in Flushpasten übliche Zusätze zugemischt werden.

7. Verfahren gemäß den Ansprüchen 1 bis 6, dadurch gekennzeichnet, daß nach dem Abtrennen des Flushwassers das Pigment in der Flushpaste (Zubereitung) nachdispergiert wird.

**Claims**

1. A continuous process for the preparation of a poorly flowing flushed color from an aqueous pigment suspension (press cake) and a water-immiscible organic liquid which may or may not contain a binder, with the aid of an intensive mixer, wherein the aqueous pigment suspension (press cake) and the water-immiscible organic liquid (binder) or the mixture of the aqueous pigment suspension (press cake) and water-immiscible organic liquid (binder) are or is continuously fed to an intensive mixing and shearing zone, from 3 to 10% by volume of the mixture present in the said zone being subjected to a shear gradient of from 500 to 7500 $S^{-1}$ at any time and the residence time under the action of this shear gradient being from 0.5 to 60 seconds, and the remaining 97–90% by volume of the mixture are subjected to shear gradients which are lower by a factor of 10 or more, and the water phase is separated off from the water/flushed color mixture leaving the intensive mixing and shearing zone.

2. A process as claimed in claim 1, wherein the shear gradient is from 1700 to 5500 $s^{-1}$.

3. A process as claimed in claim 1 or 2, wherein the temperature in the intensive mixing and shearing zone is from 20 to 220°C, preferably from 20 to 100°C.

4. A process as claimed in claim 1 or 2 or 3, wherein a screw machine is used as the intensive mixing apparatus.

5. A process as claimed in claim 1 or 2 or 3 or 4, wherein the apparatus possesses, on the outflow side, an orifice having a roller or a pair of rollers whose rotational movement prevents the flushed color from flowing away but permits the aqueous phase to flow away.

6. A process as claimed in claim 1 or 2 or 3 or 4 or 5, wherein further additives conventionally used in flushed colors are mixed with the flushed color after the water has been separated off.

7. A process as claimed in claim 1 or 2 or 3 or 4 or 5 or 6, wherein the pigment is redispersed in the flushed color (formulation) after the flushing water has been separated off.

**Revendications**

1. Procédé continu pour préparer, à l'aide d'un mélangeur intensif, des pâtes de flushing peu fluides, composées de suspensions de pigments aqueuses (tourteaux) et d'un liquide organique non miscible avec l'eau, contenant éventuellement un liant, caractérisé par le fait que l'on amène la suspension de pigment aqueuse (tourteau) et le liquide organique non miscible avec l'eau (liant), ou le mélange de suspension de pigment aqueuse (tourteau) et de liquide organique non miscible avec l'eau (liant) en continu à une zone de mélange intensif et de cisaillement, 3 à 10% en volume du mélange se trouvant dans la zone de mélange intensif et la zone de cisaillement étant à chaque instant soumis à une chute de cisaillement de 500 à 7500 $s^{-1}$, le séjour sous l'action de cette chute de cisaillement s'élevant à 0,5 à 60 secondes, et les 97 à 90% en volume restants du mélange étant soumis à des chutes de cisaillement au moins dix fois plus faibles, et on sépare la phase eau du mélange d'eau et de pâte de flushing sortant de la zone de mélange intensif et de cisaillement.

2. Procédé selon la revendication 1, caractérisé par le fait que la chute de cisaillement est de 1700 à 5500 $s^{-1}$.

3. Procédé suivant l'une des revendications 1 ou 2, caractérisé par le fait que la température dans la zone de mélange intensif et la zone de cisaillement est comprise entre 20 et 220°C, de préférence entre 20 et 100°C.

4. Procédé selon l'une des revendications 1, 2 ou 3, caractérisé par le fait qu'on utilise, comme dispositif de mélange intensif, une boudineuse.

5. Procédé selon les revendications 1 à 4, caractérisé par le fait que le dispositif présente, du côté d'écoulement, un orifice avec cylindre ou paire de cylindres dont le mouvement de rotation empêche l'écoulement de la pâte de flushing, mais permet l'écoulement de la phase aqueuse.

6. Procédé selon les revendications 1 à 5, caractérisé par le fait que l'on mélange la pâte de flushing, après séparation de l'eau, avec d'autres adjuvants usuels des pâtes de flushing.

7. Procédé selon les revendications 1 à 6, caractérisé par le fait qu'après séparation de l'eau on disperse encore le pigment dans la pâte de flushing (préparation).

EP 0 255 667 B1